# EUROPÄISCHE PATENTANMELDUNG

(11) **EP 2 985 102 A2**
(43) Veröffentlichungstag der Anmeldung: **17.02.2016**
(21) Anmeldenummer: 15175375.3
(22) Anmeldetag: 06.07.2015
(51) Int. Cl.: B23F 19/10, B23C 3/12, B23C 5/14

(54) **ENTGRATUNGS- UND VERRUNDUNGSVORRICHTUNG**

(30) Priorität: 23.07.2014 DE 102014214303
(71) Anmelder: ZF Friedrichshafen AG, 88046 Friedrichshafen (DE)
(72) Erfinder: Spinczyk, Martin, 58099 Hagen (DE); Rudi, Alexander, 45891 Gelsenkirchen (DE)

(57) **Zusammenfassung**

Offenbart ist eine Entgratungs- und Verrundungsvorrichtung (1) für komplex geformte Werkstückkanten (20, 22, 24), wie sie bei Zahnrädern zwischen der Stirnfläche und der Zahnflanke entstehen. Die Vorrichtung hat einen Industrieroboter, der eine rotierenden Fräskopf (1) entlang der Werkstückkante (20) führt, wobei der Fräskopf (1) derart gestaltet ist, dass nur äußerst schwache Kanten (18) verbleiben, auch wenn die Führung nicht präzise erfolgt.

## Beschreibung

Die Erfindung betrifft eine Entgratungs- und Verrundungsvorrichtung für Kanten von Werkstücken gemäß dem Oberbegriff des Patentanspruchs 1.

Bei Zahnrädern ergibt sich an jeder senkrecht zur Rotationsachse angeordneten Stirnfläche des Zahnrades eine komplex geformte Werkstückkante, die zwischen einerseits der Stirnfläche und andererseits den Zahnflanken, bzw. den Zahnfüßen bzw. den Kopfflächen der einzelnen Zähne angeordnet ist.

Bei der Herstellung derartiger Zahnräder oder anderer Werkstücke verbleiben an diesen Werkstückkanten oft Grate, die entfernt werden sollen. Außerdem wird oft eine Fase an der Werkstückkante vorgesehen, damit bei der Montage derartiger Zahnräder, insbesondere wenn diese schrägverzahnt sind, die Zahnflanken nicht beschädigt werden. Aus dem Stand der Technik ist es bekannt, Werkstückkanten manuell zu entgraten und anzufasen. Ein manuelles Anfasen von komplex geformten Werkstückkanten wie z.B. bei Zahnrädern ist zeitintensiv und aufwändig und benötigt viel Übung.

In der Druckschrift DE 10 2009 020 771 A1 ist ein Industrieroboter gezeigt, der einen rotierenden kreiszylindrischen Fräskopf unter einem Winkel von z.B. 45 Grad entlang der Werkstückkante eines Zahnrades führt. Damit wird die Werkstückkante entgratet und angefast. Dabei verbleiben zwei stumpfe Kanten an der (ehemaligen) Werkstückkante.

Abweichend davon wird es oft gewünscht, Werkstückkanten zu verrunden, so dass keinerlei Kanten, also auch keine stumpfen Kanten, an dem Werkstück verbleiben. Ein manuelles Verrunden von komplex geformten Werkstückkanten wie z.B. bei Zahnrädern ist zeitintensiv und aufwändig und benötigt viel Übung.

Im Rahmen einer Automatisierung der Verrundung bietet sich ein Viertelkreisfräser an, dessen Fräskopf im Längsschnitt am aus Schneiden gebildeten Außenumfang einen Viertelkreis bildet, der entlang der Werkstückkante geführt werden muss. Wenn dazu ein Industrieroboter (gemäß der DE 10 2009 020 771 A1) verwenden wird, besteht ein Problem darin, dass dessen eingeschränkte Genauigkeit zu einem zu tiefen Eintauchen oder zu einen zu großen Abstand des Viertelkeisfräsers von der zu verrundenden Werkstückkante führen kann. Damit ist der gewünschte tangentiale Übergang der Verrundung zu den angrenzenden Werkstückfläche nicht (entlang der gesamten Werkstückkante) erreichbar, insbesondere wenn die Werkstückkante eine komplexe Form wie z.B. bei einem Zahnrad aufweist.

Abweichend könnte zur präzisen Führung des Viertelkeisfräsers entlang der zu verrundenden Werkstückkante eine CNC-Maschine eingesetzt werden, wobei die Investitionskosten derartiger Maschine unverhältnismäßig hoch sind.

Dem gegenüber liegt der Erfindung die Aufgabe zu Grunde, eine Entgratungs- und Verrundungsvorrichtung zu schaffen, die mit vertretbarem Aufwand auch eine komplex geformte Werkstückkante eines Werkstückes entgraten und gleichmäßig verrunden kann, so dass keine Kanten zurückbleiben.

Diese Aufgabe wird gelöst durch eine Entgratungs- und Verrundungsvorrichtung mit den Merkmalen des Patentanspruchs 1 und durch ein Verfahren mit den Merkmalen des Patentanspruchs 9.

Weitere vorteilhafte Ausgestaltungen der Erfindung sind in den abhängigen Patentansprüchen beschrieben.

Die beanspruchte Entgratungs- und Verrundungsvorrichtung dient zum Entraten und insbesondere zum Verrunden von komplex geformten Werkstückkanten - insbesondere von Zahnrädern oder Zahnradwellen. Die Vorrichtung hat einen um eine Drehachse rotationssymmetrischen Fräskopf, der rotierend von einem Industrieroboter entlang der Werkstückkante geführt werden kann. Erfindungsgemäß hat der Fräskopf einen kegelstumpfförmigen Kegelabschnitt, an dessen bezüglich seines Durchmessers erweiterten Bereich ein im Längsschnitt des Fräskopfes betrachtet konkav bogenförmiger Außenabschnitt einstückig gebildet ist. Dabei geht der Außenabschnitt tangential in den Kegelabschnitt über. Die Bogenform des Außenabschnitts kann eine Kreisbogenform sein. Der Außenabschnitt entspricht etwa einem herkömmlichen Viertelkreisfräser, der erfindungsgemäß um den Kegelabschnitt erweitert ist.

Am Kegelabschnitt ergibt sich an seinem vom Außenabschnitt abgewandten Endabschnitt ein engerer Bereich mit einem gegenüber dem erweiterten Bereich verringerten Durchmesser. Dabei sind - entlang der Drehachse des Fräskopfes betrachtet - zunächst der Außenabschnitt, dann der erweiterten Bereich des Kegelabschnitts, und dann der engere Bereiche des Kegelabschnitts mit abnehmenden Durchmessern angeordnet. Ein besonders kantenfreier und damit tangentialer Übergang zwischen der Verrundung und den Werkstückflächen lässt sich erzielen, wenn die Schneiden des engeren Bereiches des Kegelabschnitts gegenüber denjenigen seines erweiterten Bereiches und gegenüber denjenigen des Außenabschnitts abgestumpft sind. Die Abstumpfung der Schneiden sollte stetig vom erweiterten Bereich zum engeren Bereich des Kegelabschnitts zunehmen. Dann ergibt sich eine Selbstoptimierung der Lage des Fräskopfes mit Bezug zu der zu verrundenden Werkstückkante beim Verrunden.

Es wird besonders bevorzugt, wenn sich ein Soll-Arbeitsbereich des Fräskopfes, mit dem im Idealfall die Verrundung der Werkstückkante erzeugt wird, über den erweiterten Bereich des Kegelabschnitts und einen Hauptteil des Außenabschnitts erstreckt.

Bei einer bevorzugten Weiterbildung entspricht ein Fräskopfwinkel, der zwischen der Drehachse und einem äußersten Randbereich des Außenabschnitts gebildet ist, einem Werkstückwinkel, der zwischen den beiden Werkstückflächen gebildet ist, an denen die zu verrundende Werkstückkante angeordnet ist.

Bei einem Anwendungsbeispiel dieser Weiterbildung soll eine Werkstückkante eine Zahnrades verrundet werden, die zwischen einer Stirnfläche des Zahnrades und einer Zahnflanke gebildet ist. Der Werkstückwinkel beträgt dort z.B. 100 Grad. Dann wird eine optimale Verrundung erreicht, wenn der oben definierte Fräskopfwinkel ebenfalls 100 Grad beträgt.

Bei der Weiterbildung mit dem äußersten Randbereich des Außenabschnitts sind - entlang der Drehachse betrachtet - zunächst der äußerste Randbereich des Außenabschnitts, dann der konkav bogenförmige Hauptteil des Außenabschnitts, dann der erweiterten Bereich des Kegelabschnitts, und dann der engere Bereich des Kegelabschnitts angeordnet. Die Durchmesser der genannten Abschnitte des Fräskopfes nehmen in dieser Reihenfolge ab.

Um eine Stufe an der verrundeten Werkstückkante sicher zu vermeiden wird es bevorzugt, wenn an einem äußersten Durchmesser des Außenabschnitts eine Verrundung an den Schneiden des Fräskopfes gebildet ist, die tangential in den Außenabschnitt übergeht. Dabei kann der Fräskopf einen Grundabschnitt aufweisen, der sich vom Außenabschnitt in Richtung weg vom Kegelabschnitt erstreckt, und an dem die Verrundung im Übergang zum äußersten Randbereich des Außenabschnitts gebildet ist. Damit sind - entlang der Drehachse betrachtet - zunächst der Grundabschnitt, dann der Außenabschnitt, dann der erweiterten Bereich des Kegelabschnitts und dann der engere Bereich des Kegelabschnitts angeordnet. Die Durchmesser der genannten Abschnitte des Fräskopfes nehmen in dieser Reihenfolge ab.

Am engeren Bereich ist vorzugsweise ein verrundeter Kopfabschnitt einstückig gebildet, der - im Längsschnitt des Fräskopfes betrachtet - tangential in den engeren Bereich übergeht. Der Kopfabschnitt kann die Form einer Halbkugel haben. Damit sind - entlang der Drehachse betrachtet - zunächst der Außenabschnitt, dann der erweiterten Bereich des Kegelabschnitts, dann der engere Bereich des Kegelabschnitts und dann der Kopfabschnitt angeordnet. Die Durchmesser der genannten Abschnitte des Fräskopfes nehmen in dieser Reihenfolge ab.

Eine besonders bevorzugte Weiterbildung der erfindungsgemäßen Entgratungsund Verrundungsvorrichtung hat eine elektronischen Steuerung, über die ein automatisches Antasten des Fräskopfes an die umlaufende Werkstückkante und eine automatische Korrektur eines Aufspannfehlers des Werkstücks möglich ist. Damit kann auch eine vorrichtungstechnisch einfache Spannvorrichtung insbesondere für Zahnräder oder Zahnradwellen verwendet werden.

Das erfindungsgemäße Verfahren dient zum Entgraten und Verrunden von komplex geformten Werkstückkanten insbesondere von Zahnrädern oder Zahnradwellen mittels der vorbeschriebenen Entgratungs- und Verrundungsvorrichtung. Das erfindungsgemäße Verfahren hat die Schritte:
Antasten des Fräskopfes an die Werkstückkante,
Ermitteln einer Aufspannabweichung, und
Verrunden der Werkstückkante unter Berücksichtigung der Aufspannabweichung.

Bei einer besonders bevorzugten Weiterbildung des erfindungsgemäßen Verfahrens wird der Kegelabschnitt des Fräskopfes an eine Zahlflanke eines Zahns eines Zahnrades oder einer Zahnradwelle angelegt.

Wenn der Fräskopf den verrundeten Kopf aufweiset, kann dieser zunächst in radialer Richtung des Zahnrades oder der der Zahnradwelle zwischen die Zähne geführt werden.

Nach dem Abfahren der Werkstückkante mit dem Fräskopf kann noch ein Nachschleifen der Übergänge zwischen der Verrundung und den Werkstückflächen erfolgen um eventuell verbliebene minimale Kanten zu glätten.

Im Folgenden wird anhand einer Figur ein Ausführungsbeispiel der Erfindung detailliert beschrieben.

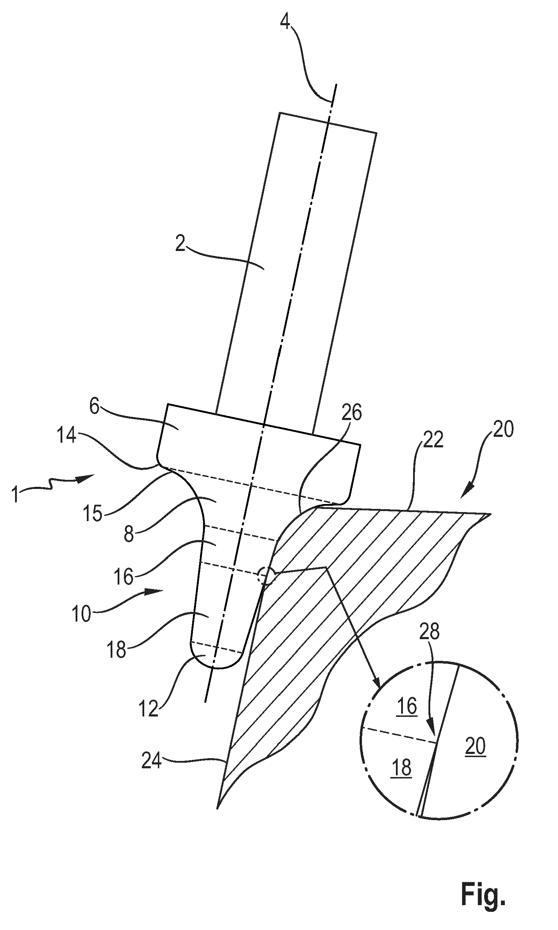

Die Figur zeigt ein erstes Ausführungsbeispiel eines Fräskopfes 1 der erfindungsgemäßen Entgratungs- und Verrundungsvorrichtung im Betrieb.

Der Fräskopf 1 ist an einem Schaft 2 befestigt, der von einem nicht näher gezeigten Industrieroboter um eine Drehachse 4 rotatorisch angetrieben wird und dabei weitgehend frei im Raum positioniert und geschwenkt werden kann.

Der Fräskopf 1 hat - ausgehend vom Schaft 2 - folgende rotationssymmetrische Abschnitte, die gemeinsam und einstückig den Fräskopf 1 bilden: einen Grundabschnitt 6, dazu benachbart einen Außenabschnitt 8, dazu benachbart einen Kegelabschnitt 10 und schließlich einen dazu benachbarten Kopfabschnitt 12. Der Grundabschnitt 6 bildet den Bereich mit dem größten Durchmesser des Fräskopfes 1 und ist im Wesentlichen kreiszylindrisch. Im Übergangsbereich zum Außenabschnitt 8 hat der Grundabschnitt 6 eine konvexe Verrundung 14. Der Außenabschnitt 8 ist - im Längsschnitt des Fräskopfes 1 betrachtet - konkav gekrümmt, so dass sein Durchmesser von der Verrundung 14 über seinen äußersten Randbereich 15 in Richtung weg vom Schaft 2 deutlich abnimmt. Der Außenabschnitt 8 bildet einen stetigen tangentialen Übergang zum Kegelabschnitt 10, der sich wiederum in einen erweiterten Bereich 16 und in einen engeren Bereich 18 untergliedern lässt. Abschließend ist am engeren Bereich 18 des Kegelabschnitts 10 der etwa halbkugelförmige Kopfabschnitt 12 angeordnet, der - im Längsschnitt des Fräskopfes 1 betrachtet - wiederum tangential und stetig an den engeren Bereich 18 anschließt. Somit gehen alle Bereiche 6, 8, 16, 18, 12 des Fräskopfes 1 stetig und tangential ineinander über, wobei die einzelnen Durchmesser über den Außenabschnitt, den Kegelabschnitt und den Kopfabschnitt 12 stetig verringert werden.

An der Verrundung 14 des Grundabschnitts 6, an dem Außenabschnitt 8 und am erweiterten Bereich 16 des Kegelabschnitts 10 sind nicht gezeigte Schneiden des Fräskopfes 1 vergleichsweise scharf, während die Schneiden des engeren Bereichs 18 des Kegelabschnitts 10 vergleichsweise stumpf sind. Genauer gesagt nimmt die Schärfe der Schneiden ausgehend vom erweiterten Bereich 16 bis zum engeren Bereich 18 stetig ab.

In der Figur ist gezeigt, wie der Fräskopf 1 der erfindungsgemäßen Vorrichtung an einer verrundeten Werkstückkante eines Zahns 20 eines Zahnrades anliegt, nachdem der Fräskopf 1 einen Grat entfernt und die Werkstückkante verrundet hat. Die gezeigte Schnittebene des Zahns 20 ist tangential zum Zahnrad ausgerichtet, so dass die Blickrichtung der Figur radial zur Rotationsachse des Zahnrades gerichtet ist. Da das Zahnrad schräg verzahnt ist, bildet eine Stirnseite 22 des Zahnrades und damit auch des Zahns 20 mit der einen geschnittenen Zahnflanke 24 einen Winkel von etwa 100°. Die Drehachse 4 der erfindungsgemäßen Vorrichtung ist parallel zu dieser Zahnflanke 24 ausgerichtet. Der Soll-Arbeitsbereich des Fräskopfes 1 erstreckt sich über den wesentlichen Teil des Außenabschnitts 8 und über den erweiterten Bereich 16 des Kegelabschnitts 10.

Eine weitere Annäherung der Drehachse 4 an die Zahnflanke 24 wird dadurch erschwert, dass die dann zunehmend in Eingriff kommenden Schneiden des engeren Bereichs 18 abgestumpft sind. Eine leichte Abweichung von der gezeigten parallelen Lage der Drehachse 4 zur Zahnflanke 24 kann toleriert werden. Erfindungsgemäß wird stets ein fast tangentialer Übergang der Stirnfläche 22 und der Zahnflanke 24 zur Verrundung 26 geschaffen. Durch ein abschließendes Schleifen können auch diese minimalen Kanten 28 noch geglättet werden.

Offenbart ist eine Entgratungs- und Verrundungsvorrichtung für komplex geformte Werkstückkanten, wie sie bei Zahnrädern zwischen der Stirnfläche und der Zahnflanke entstehen. Die Vorrichtung hat einen Industrieroboter, der eine rotierenden Fräskopf entlang der Werkstückkante führt, wobei der Fräskopf derart gestaltet ist, dass nur äußerst schwache Kanten verbleiben, auch wenn die Führung nicht präzise erfolgt.

### Bezugszeichenliste

- 1: Fräskopf
- 2: Schaft
- 4: Drehachse
- 6: Grundabschnitt
- 8: Außenabschnitt
- 10: Kegelabschnitt
- 12: Kopfabschnitt
- 14: Verrundung
- 15: äußerster Randbereich
- 16: erweiterter Bereich
- 18: engeren Bereich
- 20: Zahn
- 22: Stirnfläche
- 24: Zahnflanke
- 26: Verrundung
- 28: minimale Kante

## Patentansprüche

1. Entgratungs- und Verrundungsvorrichtung für Werkstückkanten mit einem rotationssymmetrischen Fräskopf (1), der von einem Industrieroboter führbar ist, **dadurch gekennzeichnet, dass** der Fräskopf (1) einen kegelstumpfförmigen Kegelabschnitt (10) hat, an dessen erweiterten Bereich (16) ein - im Längsschnitt des Fräskopfes (1) betrachtet - konkav bogenförmiger Außenabschnitt (8) einstückig gebildet ist, der - im Längsschnitt des Fräskopfes (1) betrachtet - tangential in den Kegelabschnitt (10) übergeht.

2. Entgratungs- und Verrundungsvorrichtung nach Anspruch 1, wobei Schneiden eines engeren Bereiches (18) des Kegelabschnitts (10) gegenüber denjenigen seines erweiterten Bereiches (16) und gegenüber denjenigen des Außenabschnitts (8) abgestumpft sind.

3. Entgratungs- und Verrundungsvorrichtung nach Anspruch 2, wobei die Abstumpfung der Schneiden übergangslos vom erweiterten Bereich (16) zum engeren Bereich (18) zunimmt.

4. Entgratungs- und Verrundungsvorrichtung nach einem der vorhergehenden Ansprüche, wobei sich ein Soll-Arbeitsbereich des Fräskopfes (1) über den erweiterten Bereich (16) und einen Hauptteil des Außenabschnitts (8) erstreckt.

5. Entgratungs- und Verrundungsvorrichtung nach einem der vorhergehenden Ansprüche, wobei ein Fräskopfwinkel zwischen einer Drehachse (4) des Fräskopfes (1) und einem äußersten Randbereich (15) des Außenabschnitts (8) einem Werkstückwinkel zwischen den beiden Werkstückflächen (22, 24) entspricht, zwischen denen die zu verrundende Werkstückkante angeordnet ist.

6. Entgratungs- und Verrundungsvorrichtung nach einem der vorhergehenden Ansprüche, wobei der Fräskopf (1) einen Grundabschnitt (6) aufweist, der sich vom Außenabschnitt (8) in Richtung weg vom Kegelabschnitt (10) erstreckt, und an dem eine Verrundung (14) gebildet ist, die tangential in den Außenabschnitt (8) übergeht.

7. Entgratungs- und Verrundungsvorrichtung nach einem der Ansprüche 2 bis 6, wobei am engeren Bereich ein verrundeter Kopfabschnitt (12) einstückig gebildet ist, der - im Längsschnitt des Fräskopfes (1) betrachtet - tangential in den engeren Bereich (18) übergeht.

8. Entgratungs- und Verrundungsvorrichtung nach einem der vorhergehenden Ansprüche mit einer elektronischen Steuerung, über die ein automatisches Antasten des Fräskopfes (1) und eine automatische Korrektur eines Aufspannfehlers des Werkstücks ermöglicht ist.

9. Verfahren zum Entgraten und Verrunden von komplex geformten Werkstückkanten mit einer Entgratungs- und Verrundungsvorrichtung gemäß Anspruch 8 **gekennzeichnet durch** die Schritte:
Antasten des Fräskopfes (1) an die Werkstückkante,
Ermitteln einer Aufspannabweichung, und
Verrunden der Werkstückkante unter Berücksichtigung der Aufspannabweichung.

10. Verfahren gemäß Anspruch 9, wobei der Kegelabschnitt (10) des Fräskopfes (1) an eine Zahlflanke (24) eines Zahns (20) eines Zahnrades oder einer Zahnradwelle angelegt wird.

11. Verfahren gemäß Anspruch 9 mit dem abschließenden Schritt: Schleifen der Übergänge (28) zwischen der Verrundung und den Werkstückflächen (22, 24).
